# EUROPÄISCHE PATENTSCHRIFT

(11) **EP 0 623 832 B1**
(45) Veröffentlichungstag und Bekanntmachung des Hinweises auf die Patenterteilung: **27.05.1998**
(21) Anmeldenummer: 94103854.9
(22) Anmeldetag: 14.03.1994
(51) Int. Cl.: G02B 6/44

(54) **Kabelverteilergestell**
Distribution mounting for cables
Monture de répartition pour cables

(30) Priorität: 05.05.1993 DE 4315681
(43) Veröffentlichungstag der Anmeldung: 09.11.1994
(73) Patentinhaber: KRONE Aktiengesellschaft, 14167 Berlin-Zehlendorf (DE)
(72) Erfinder: Teichler, Heide, D-10829 Berlin (DE); Röseler, Volker, Dipl.-Ing., D-10555 Berlin (DE); Gerke, Dieter, D-13509 Berlin (DE)

(56) Entgegenhaltungen:
- EP-A- 0 186 579
- EP-A- 0 369 524
- EP-A- 0 536 496
- WO-A-91/05281
- WO-A-91/10927
- DE-A- 3 542 724
- US-A- 4 995 688

## Beschreibung

Die Erfindung bezieht sich auf einen Kabelverzweiger der Fernmelde-und Datentechnik.

Kabelverzweiger werden zur Verzweigung von Kupfer-Netzkabeln der Deutschen Bundespost bzw. der Telecom zu den Teilnehmeranschlüssen allgemein verwendet. Die Kabelverzweiger für Kupferkabel enthalten Rangiergestelle, in die Garnituren eingebracht sind, mit deren Hilfe die Verzweigung des ankommenden Hauptkabels zu den Teilnehmeranschlüssen z.B. über Trenn- und Schaltleisten in Schneid-Klemm-Technik erfolgt.

Die Verwendung von Lichtwellenleitern in der Fernmelde- und Datentechnik erfordert die Anpassung und die Neuentwicklung von Garnituren und Gehäusen, um den Besonderheiten des Übertragungsmediums Lichtwellenleiter gerecht zu werden.

Es sind bereits Glasfaser-Endverschlüsse bekannt, die in bekannte Stahlblech-Verteiler mehrfach eingebracht werden können (Prospekt der Firma RXS Schrumpftechnik-Garnituren GmbH, Hagen). Ein solcher Stahlblech-Verteiler mit mehrfach in Reihe nebeneinander angeordneten Glasfaser-Endverschlüssen erlaubt jedoch nur die Verbindung zwischen Haupt- und Verzweigungskabeln, nicht die Einbeziehung von Spleißkassetten und von Kopplern. Kabelverzweiger von diesem oder öhnlichem Type sind auch aus den Schriften US-A-4 995 688, EP-A- 186 579, EP-A- 536 496 oder WO-A- 91/10927 bekannt.

Der Erfindung liegt von daher die Aufgabe zugrunde, die in der Kupferkabel-Fernmelde- und Datentechnik verwendeten Kabelverzweiger so weiterzuentwickeln, daß in ihnen eine Lichtwellenleiterverzweigung in Verbindung mit Spleißkassetten und Kopplern übersichtlich und unter Gewährleistung einzuhaltender Mindestbiegeradien erfolgen kann.

Zur Lösung dieser Aufgabe sieht die Erfindung einen Kabelverzweiger nach Anspruch 1 vor.

Die Anordnung eines Rangierkanals zwischen den Trageschienen zur Aufnahme der Spleißkassetten-Gehäuse im oberen Bereich und zur Aufnahme der Kopplergehäuse im unteren Bereich des Kabelverzweigers sowie die Anordnung einer Laufschiene für eine Montagehilfe erlauben eine geordnete, übersichtliche Führung der Lichtwellenleiter bei Einhaltung der Mindestbiegeradien. Servicearbeiten, Veränderungen in der Kabelführung sowie Erweiterungen können schnell und mit geringem Aufwand durchgeführt werden. Lichtwellenleiterverzweigungen können in Verbindung mit Spleißkassetten und mit Kopplern in jedem Standardgehäuse installiert werden. Dabei ist eine bisher nicht erreichte Belegungsdichte erzielbar sowie eine im gesamten Verzweiger torsionsfreie Faserführung gewährleistet.

Weitere vorteilhafte Ausgestaltungen der Erfindung ergeben sich aus den Unteransprüchen.

Der erfindungsgemäße Kabelverzweiger für Glasfaserkabel der Fernmelde- und Datentechnik ist nachfolgend anhand eines in den Zeichnungen dargestellten Ausführungsbeipieles näher erläutert. Es zeigen:
- Fig. 1: die schematische Vorderansicht des Kabelverzweigers ohne Tür,
- Fig. 2: die schematische Seitenansicht des Kabelverzweigers nach Fig. 1 in Schnittdarstellung,
- Fig. 3: die Draufsicht auf ein geöffnetes Spleißkassetten-Gehäuse mit eingelegter Spleißkassette,
- Fig. 4: die schematische Vorderansicht des Rangierkanals (Teilabschnitt),
- Fig. 5: die Draufsicht auf den Rangierkanal nach Fig. 4 und
- Fig. 6: den Schnitt des Rangierkanals nach Fig.4 entlang der Linie A : A.

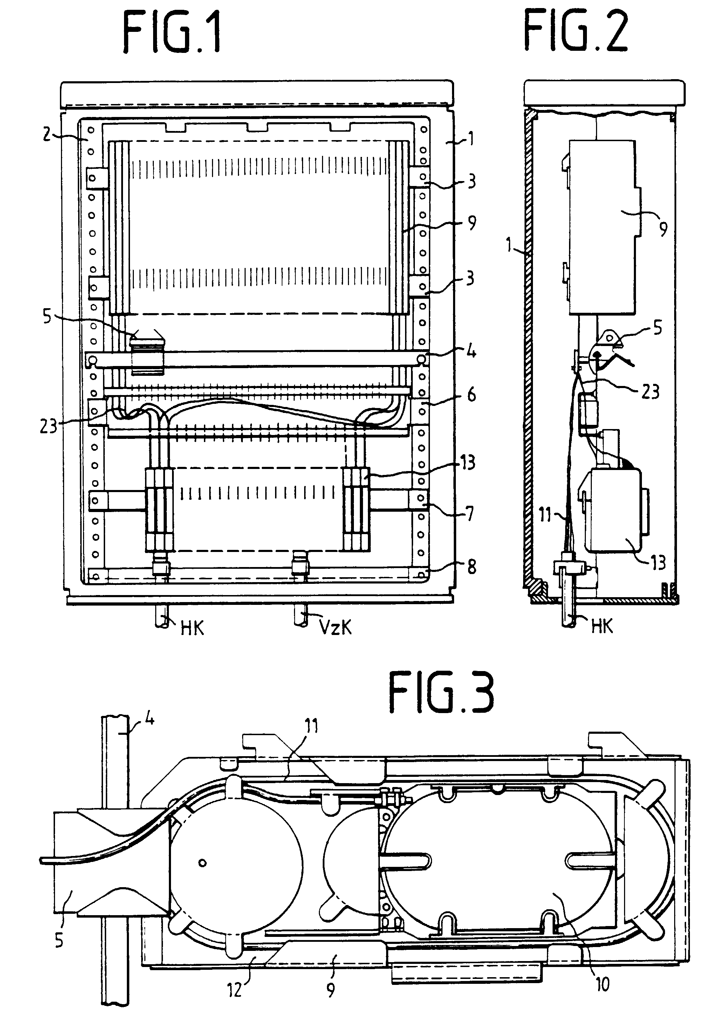

Der Kabelverzweiger besteht entsprechend der Darstellung in den Figuren 1 und 2 aus einem Gehäuse 1 mit einem Rangiergestell 2 und einer nicht dargestellten Tür. In den Kabelverzweiger sind Trageschienen 3 zur Aufnahme von maximal 44 Kassettengehäusen 9 eingebracht. Im Beispiel sind die Trageschienen 3 mittels einer nicht dargestellten Schraubverbindung am Rangiergestell 2 befestigt. Um die Zuordnung der Glasfasern 23 nach einem Belegungsplan zu erleichtern sind die Kassettenplätze der Trageschienen 3 durch Zahlen gekennzeichnet. Unterhalb der Trageschienen 3 ist eine Laufschiene 4 abnehmbar am Rangiergestell 2 befestigt. Auf die Laufschiene 4 ist eine Montagehilfe 5 verschiebbar eingehängt. Zur Durchführung notwendiger Arbeitsschritte in der jeweiligen Kassette 10 (Fig.3) wird das Kassettengehäuse 9 auf die Montagehilfe 5 abgelegt. Unterhalb der Laufschiene 4 ist ein Rangierkanal 6 vorgesehen, der zur Faserführung von und zu den Spleißkassetten 10 bzw. Kopplern 13 sowie zur Führung der Bündeladern 11 dient. Der Rangierkanal 6 ist im wesentlichen als U-Profil ausgebildet und beidseitig am Rangiergestell 2 befestigt. Unterhalb des Rangierkanals 6 ist eine Trageschiene 7 zur Aufnahme von maximal 30 Kopplern 13 am Rangiergestell 2 angeordnet. Die Plätze für die Koppler 13 sind an der Trageschiene 7 durch Zahlen gekennzeichnet, um die Zuordnung der Glasfasern 23 nach Belegungsplan zu erleichtern. Ebenso gekennzeichnet sind die Einführungsöffnungen für die Fasern 23 an dem Rangierkanal 6. Unterhalb der Trageschiene 7 ist eine Kabelabfangschiene 8 am Rangiergestell 2 befestigt. Die Kabelführung ist in den Figuren 1 und 2 schematisch dargestellt. Das Hauptkabel HK und das Verzweigerkabel VzK sind durch die nicht dargestellten Kabeldurchführungen der Bodenplatte des Kabelverzweigergehäuses 1 bis zu einer Höhe geführt, die eine ausreichende Reservelänge und ein sicheres Einführen, Wickeln und Spleißen in den Spleißkassetten 10 gewährleistet. Die Kabelmäntel der Kabel HK und VzK sind bis zur Kabelabfangschiene 8 abgesetzt, an der die Kabel HK, VzK mittels Kabelschellen befestigt sind. Die freigelegten Bündeladern 11 sind nach Belegungsplan sortiert über den Rangierkanal 6 den entsprechenden Spleißkassettenplätzen zugeordnet. Die gemäß Belegungsplan sortierten und befestigten Bündeladern 11 der Kabel HK und VzK sind bis zu einer Länge abisoliert, die ausreicht, um in den Spleißkassetten 10 ausreichende Faserlängen zu haben. Entsprechend der Darstellung in der Figur 3 sind die so vorbereiteten Bündeladern 11 an der Spleißkassette 10 befestigt, die abisolierten Faserlängen sind lose in die Spleißkassette 10 eingelegt. Zum Aufwickeln der an der Spleißkassette 10 befestigten Bündeladerüberlängen dient das Kassettengehäuse 9. Das Kassettengehäuse 9 wird in die Montagehilfe 5 gebracht, die Kassette 10 wird in das Kassettengehäuse 9 gelegt, die Bündeladerüberlängen sind im Führungskanal 12 des Kassettengehäuses 9 einmal lose um die Spleißkassette 10 herumgeführt. Nach dem Schließen des Kassettengehäuses 9 wird dieses aus der Montagehilfe 5 entnommen und in die Trageschienen 3 entsprechend Belegungsplan eingehängt (Fig.3). Die Installation der optischen Koppler 13 (Fig.3) erfolgt in analoger Art und Weise. Die Koppler 13 werden gemäß Belegungsplan in die untere Trageschiene 7 installiert. Entsprechend Belegungsplan sind die Kopplerfasern durch die Führungsöffnungen des Rangierkanals 6 den entsprechenden Hauptkabel- und Verzweigerkabel-Kassetten 10 zugeordnet.

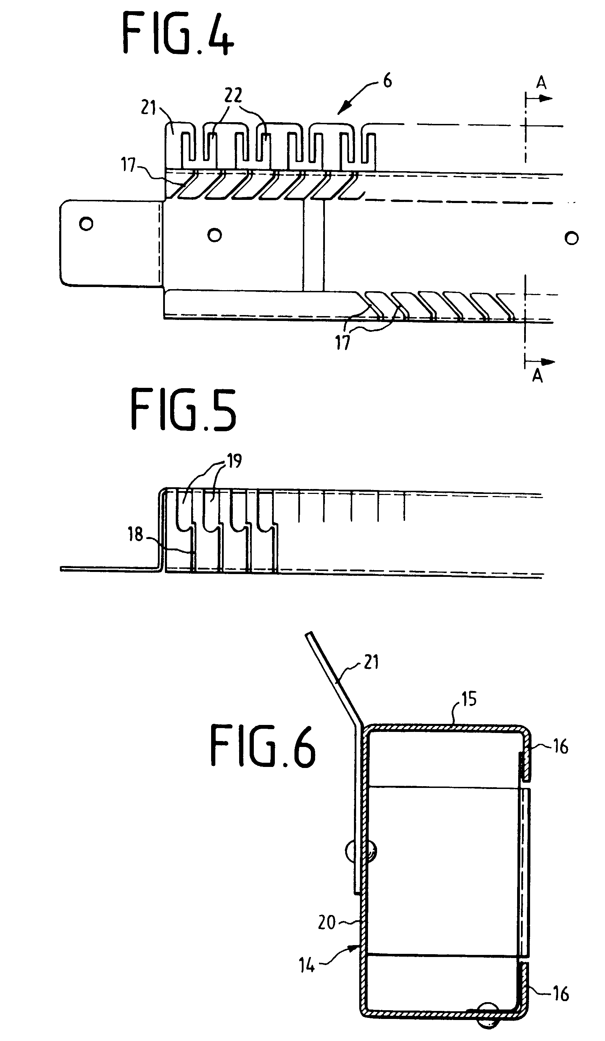

In den Fig. 4 bis 6 ist in schematischer Darstellung der Rangierkanal 6 gezeigt. Der Rangierkanal 6 besteht aus einem u-förmigen Grundkörper 14 (Fig.6), dessen Schenkel 15 rechtwinklig nach innen abgewinkelte Aufnahmen 16 aufweisen (Fig. 6). Die Aufnahmen 16 sind aus schräg geführten parallelen Schlitzen 17 gebildet (Fig.4), die in parallelen Führungskanälen 18 münden (Fig.5), welche in parallel angeordneten Führungsräumen 19 enden. Die unten liegenden Aufnahmen 16 dienen der Einführung der Kopplerfasern 23 in den Rangierkanal 6. Die oben liegenden Aufnahmen 16 dienen der Führung der Kopplerfasern 23 aus dem Rangierkanal 6 direkt zu den jeweiligen Spleißkassetten 10. An der Basis 20 des u-förmigen Grundkörpers 14 ist ein nach hinten abgewinkeltes Führungsblech 21 (Fig.4,6) mit Führungsschlitzen 22 zur Führung der Bündeladern 11 zu den Spleißkassetten 10 angebracht. Jeder Führungsraum 19 ist für maximal 32 Fasern 23 ausgelegt. Die Anzahl der Aufnahmen 16 entspricht der maximalen Anzahl von Kopplern 13 bzw. von Spleißkassetten 10.

### BEZUGSZEICHENLISTE

- 1: Gehäuse
- 2: Rangiergestell
- 3: Trageschiene
- 4: Laufschiene
- 5: Montagehilfe
- 6: Rangierkabel
- 7: Trageschiene
- 8: Kabelabfangschiene
- 9: Spleißkassettengehäuse
- 10: Spleißkassette
- 11: Bündelader
- 12: Führungskanal
- 13: Koppler
- 14: u-förmiger Grundkörper
- 15: Schenkel
- 16: Aufnahme
- 17: Schlitz
- 18: Führungskanal
- 19: Führungsraum
- 20: Basis
- 21: Führungsblech
- 22: Führungsschlitz
- 23: Faser

- HK: Hauptkabel
- VzK: Verzweigungskabel

## Patentansprüche

1. Kabelverzweiger der Fernmelde- und Datentechnik, aus einem Gehäuse (1) mit Rangiergestell (2), wobei das Rangiergestell
* eine erste Tragschiene (3) zur Aufnahme von Spleißkassettengehäusen (9),
* eine zweite Tragschiene (7) zur Aufnahme von optischen Kopplern (13),
* einen einen Rangierkanal bildenden Körper (6) zur Einführung der Kopplerfasern und zur Führung von Fasern zu den jeweiligen Spleißkassetten, und
* eine Laufschiene (4) mit einer darauf bewegbaren Montagehilfe (5) aufweist, welche zur Ablage eines Spleißkassettengehäuses im Fall von Arbeitsschritten in der Spleißkassette geeignet ist, und wobei die Laufschiene (4) unterhalb der Tragschiene (3) für die Spleißkassettengehäuse angeordnet ist.

2. Kabelverzweiger nach Anspruch 1, dadurch gekennzeichnet, daß der Rangierkanalkörper (6) zwischen oberen Trageschienen (3) zur Aufnahme der Spleißkassetten-Gehäuse (9) und einer unteren Trageschiene (7) zur Aufnahme der Koppler (13) angeordnet ist.

3. Kabelverzweiger nach Anspruch 1, dadurch gekennzeichnet, daß der Rangierkanalkörper (6) unterhalb der Trageschiene (3) zur Aufnahme der Spleißkassetten-Gehäuse (9) und der Koppler (13) angeordnet ist.

4. Kabelverzweiger nach Anspruch 1, dadurch gekennzeichnet, daß der Rangierkanalkörper (6) oberhalb der Trageschiene (3) zur Aufnahme der Spleißkassetten-Gehäuse (9) und der Koppler (13) angeordnet ist.

5. Kabelverzweiger nach einem der Ansprüche 1 bis 4, dadurch gekennzeichnet, daß der Rangierkanalkörper 6 aus einem u-förmigen Grundkörper (14) besteht, an dessen Basisseite (20) ein abgewinkeltes Führungsblech (21) zur Bündelader-Führung befestigt ist.

6. Kabelverzweiger nach Anspruch 5, dadurch gekennzeichnet, daß die beiden Schenkel (15) des u-förmigen Grundkörpers (14) des Rangierkanals (6) nach innen weisende Aufnahmen (16) mit schrägen, parallelgeführten Einführschlitzen (17), die in gerade, parallelgeführte Kanäle (18) münden und in parallel angeordneten Führungsräumen (19) enden, aufweisen.

7. Kabelverzweiger nach den Ansprüchen 1 bis 6, dadurch gekennzeichnet, daß die Spleißkassetten (10) in Gehäusen (9) vormontiert in die Trageschienen (3,7) eingehängt sind.

## Claims

1. Cable distribution cabinet in telecommunication engineering and data technology, comprising a housing (1) with a jumpering rack (2), the jumpering rack
* having a first support rail (3) for holding splice cassette housings (9),
* having a second support rail (7) for holding optical couplers (13),
* having a member (6) which forms a jumpering channel and serves to insert the coupler fibres and to guide fibres to the respective splicing cassettes, and
* having a running rail (4) with a mounting aid (5), which can move thereon and is suitable for depositing a splicing cassette housing in the case of work steps in the splicing cassette, and the running rail (4) being arranged below the support rail (3) for the splicing cassette housings.

2. Cable distribution cabinet according to Claim 1, characterized in that the jumpering channel member (6) is arranged between upper support rails (3) for holding the splicing cassette housings (9) and a lower support rail (7) for holding the couplers (13).

3. Cable distribution cabinet according to Claim 1, characterized in that the jumpering channel member (6) is arranged below the support rail (3) for holding the splicing cassette housings (9) and the couplers (13).

4. Cable distribution cabinet according to Claim 1, characterized in that the jumpering channel member (6) is arranged above the support rail (3) for holding the splicing cassette housings (9) and the couplers (13).

5. Cable distribution cabinet according to one of Claims 1 to 4, characterized in that the jumpering channel member (6) comprises a u-shaped basic body (14) to whose base side (20) an angled-away guide plate (31) for guiding multifibre units is fastened.

6. Cable distribution cabinet according to Claim 5, characterized in that the two limbs (15) of the u-shaped basic body (14) of the jumpering channel (6) have inwardly pointing receptacles (16) with sloping insertion slots (17) which are guided in parallel, open into straight channels (18) which are guided in parallel, and terminate in guide chambers (19) arranged in parallel.

7. Cable distribution cabinet according to Claims 1 to 6, characterized in that the splicing cassettes (10) are suspended in the support rails (3, 7) in a fashion preassembled in housings (9).

## Revendications

1. Boîte de répartition des techniques de télécommunications et de données, composée d'un boîtier (1) avec baie de connexions (2), la baie de connexions présentant
- un premier rail porteur (3) destiné à recevoir les boîtiers (9) des cassettes d'épissurage,
- un deuxième rail porteur (7) destiné à recevoir des coupleurs optiques (13),
- un corps (6) formant un canal d'interconnexion destiné à l'introduction des fibres de coupleurs et au guidage de fibres vers les cassettes d'épissurage correspondantes, et
- une glissière (4) comprenant un auxiliaire de montage (5) pouvant être déplacé sur celle-ci et convenant pour recevoir une cassette d'épissurage dans le cas d'opérations à réaliser dans la cassette d'épissurage, la glissière (4) étant disposée en dessous du rail porteur (3) destiné aux boîtiers des cassettes d'épissurage.

2. Boîte de répartition suivant la revendication 1, caractérisée en ce que le corps (6) du canal d'interconnexion est disposé entre des rails porteurs (3) supérieurs destinés à recevoir les boîtiers (9) des cassettes d'épissurage et un rail porteur (7) inférieur destiné à recevoir les coupleurs (13).

3. Boîte de répartition suivant la revendication 1, caractérisée en ce que le corps (6) du canal d'interconnexion est disposé en dessous du rail porteur (3) destiné à recevoir les boîtiers (9) des cassettes d'épissurage et les coupleurs (13).

4. Boîte de répartition suivant la revendication 1, caractérisée en ce que le corps (6) du canal d'interconnexion est disposé au-dessus du rail porteur (3) destiné à recevoir les boîtiers (9) des cassettes d'épissurage et les coupleurs (13).

5. Boîte de répartition suivant l'une quelconque des revendications 1 à 4, caractérisée en ce que le corps (6) du canal d'interconnexion est constitué d'un corps de base en forme de U (14), à la face de base (20) duquel une tôle de guidage (21) pliée est fixée pour le guidage des fils du faisceau.

6. Boîte de répartition suivant la revendication 5, caractérisée en ce que les deux ailes (15) du corps de base en forme de U (14) du canal d'interconnexion (6) présentent des logements (16) orientés vers l'intérieur comprenant des fentes d'introduction (17) obliques, parallèles entre elles, qui débouchent dans des canaux (18) droits, parallèles entre eux, et se terminent dans des espaces de guidage (19) disposés parallèlement.

7. Boîte de répartition suivant les revendications 1 à 6, caractérisée en ce que les cassettes d'épissurage (10), prémontées dans des boîtiers (9), sont accrochées aux rails porteurs (3, 7).
